# EUROPEAN PATENT APPLICATION

(11) **EP 3 441 828 A2**
(43) Date of publication of application: **13.02.2019**
(21) Application number: 18180703.3
(22) Date of filing: 29.06.2018
(51) Int. Cl.: G05B 13/04

(54) **PLANT OPERATION SUPPORT SYSTEM AND PLANT OPERATION SUPPORT METHOD**

(30) Priority: 07.07.2017 JP 2017133806
(71) Applicant: Hitachi, Ltd., Chiyoda-ku Tokyo 100-8280 (JP)
(72) Inventor: HORI, Yoshinari, Tokyo, 100-8280 (JP); MUKAIDE, Masaaki, Tokyo, 100-8280 (JP); YAMAMOTO, Hiroki, Tokyo, 100-8280 (JP)
(74) Representative: MERH-IP Matias Erny Reichl Hoffmann Patentanwälte PartG mbB

(57) **Abstract**

A plant operation support system (1) includes a target extraction unit (12) configured to calculate respective evaluation values for the plant (21) that is operated according to each of the operation data, and respective spatial distances from current operation data to each of the operation data to extract candidates for target operation data according to the respective evaluation values and the respective spatial distances that are calculated respectively, and a route determination unit (15) configured to evaluate, for each of the extracted candidates for the operation data, with the operation content from the current operation data to the target operation data as an operation route, the operation route of each of the candidates, resulting in determining the operation route to be adopted and the target operation data that is an end point of the operation route.

## Description

The current application claims priority under 35 U.S.C §119 to Japanese patent Application No.2017-133806, filed on July 7, 2017, entitled "PLANT OPERATION SUPPORT SYSTEM AND PLANT OPERATION SUPPORT METHOD". The contents of this application are incorporated herein by reference in their entirely.

### TECHNICAL FIELD

The present invention relates to a plant operation support system and a plant operation support method.

### BACKGROUD

Plant control devices of power generation plants and chemical plants or the like have various functions for manufacturing target products efficiently integrated thereinto. The most common control function is PID (Proportional-Integral-Differential) control that is capable of controlling a state quantity of a plant in such a way that the state quantity of the plant satisfies a target value. The PID control is implemented on the control devices of various plants.

Further, a model predictive control that predicts a future value for an operation state of the plant and then determines manipulated variables in such a way that the operation state from the current to the future is optimal to the control target value has recently been applied to respond to an operation state of the plant and environmental change. However, when the number of the manipulated variables increases, a desired control effect may not be obtained for the influence of interaction among the manipulated variables. Therefore, Japanese Published Unexamined Patent Application Publication No.2013-37436 discloses a plant control device in consideration of the interaction among the manipulated variables resulting from time factor of a process of the plant.

### Technical Problem

Aged plants and plants with a comparatively new process may be changed in a plant state and deteriorated in plant efficiency and product yield by some disturbance. In this case, how to set a target plant state appropriately rather than improvement of a control characteristic up to the target value has become a problem to be solved.

Further, traditional technologies such as Japanese Published Unexamined Patent Application Publication No.2013-37436 haven't provided means for determining what kind of operation state should be the target starting from a current operation state of the plant.

Accordingly, it is a main object of the present invention to present the target of the operation state for operating the plant appropriately starting from the current operation state of the plant.

### Solution to Problem

In order to solve the above problem, the plant operation support system of the present invention has the following characteristics.

The present invention includes: a target extraction unit configured to calculate, for each of operation data that is at least one of data measured on a plant to be controlled and input data for controlling the plant, respective evaluation values for the plant that is operated according to each of the operation data, and respective spatial distances from a first position in a n-dimensional space (n≧2) to which current operation data is mapped to a second position in the n-dimensional space to which each of the operation data is mapped, to extract candidates for target operation data according to the respective evaluation values and the respective spatial distances that are calculated respectively; a route determination unit configured to evaluate, for each of the extracted candidates for the target operation data, with operation content from the current operation data to the target operation data as an operation route, the operation route for each of the candidates, to determine the operation route to be adopted and the target operation data that is an end point of the operation route to be adopted; and/or a display unit configured to display on map data the operation route from the operation data that is a start point of the operation route to the target operation data.

Other units will be described below.

### Advantageous Effects of Invention

According to the present invention, it is possible to present the target of the operation state for operating the plant appropriately, with the current operation state of the plant as a start point.

### Brief Description of Drawings

The present invention is described in detail below with reference to the attached drawing figures, wherein:

FIG.1 is a block diagram of a plant system according to an embodiment of the present invention.

FIG.2 is an example of a system diagram of a chemical plant displayed on a screen of a display operation unit according to the embodiment of the present invention.

FIG.3 is a table that shows an example of operation data that is stored in an operation data database according to the embodiment of the present invention.

FIG.4 is an explanatory drawing that shows an example in which the operation data is classified into categories by a classifier according to the embodiment of the present invention.

FIG.5 is an explanatory drawing that shows category map data obtained by mapping 15 categories to a two-dimensional plane (XY plane) according to the embodiment of the present invention.

FIG.6 is an explanatory drawing that shows an operation route set on the category map data according to the embodiment of the present invention.

FIG.7 is a flowchart that shows a processing performed by a target state candidate extraction unit according to the embodiment of the present invention.

FIG.8 is a table that shows a calculation result of plant performance according to the embodiment of the present invention.

FIG.9 is a table that shows a result obtained by extracting categories (N=5) in a descending order of the plant performance from the table of the plant performance of FIG.8 according to the embodiment of the present invention.

FIG.10 is a table that shows a result obtained by sorting entries in the table of FIG.9 in an ascending order of distance from an initial category according to the embodiment of the present invention.

FIG.11 is a table that shows combinations of the operation routes starting from an initial category toward each candidate for a target category according to the embodiment of the present invention.

FIG.12 a graph that shows a transient state between two categories in a simulation result of a plant simulator according to the embodiment of the present invention.

FIG.13 is a table that shows a result obtained by determining the operation routes according to the embodiment of the present invention.

FIG.14 is a block diagram obtained by adding an operation monitoring unit to the plant system of FIG.1 according to the embodiment of the present invention.

FIG.15 is a display screen view that shows an extended example obtained by extending the category map data to a spatial coordinate (XYZ axes) according to the embodiment of the present invention.

FIG.16 is a display screen view obtained by adding the operation routes to the category map data of FIG.15.

FIG.17 is a display screen view obtained by adding guidance for the current category that is not deviated from the operation route, to the category map data of FIG.16.

FIG.18 is a display screen view obtained by adding guidance for the current category that is deviated from the operation route, to the category map data of FIG.16.

### Description of Embodiments

An embodiment of the present invention will be described with reference to the drawings hereinafter.

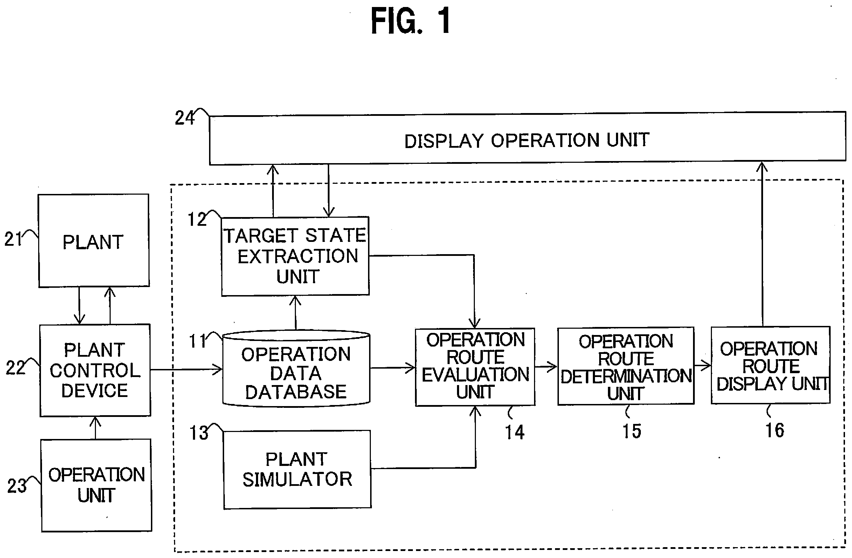

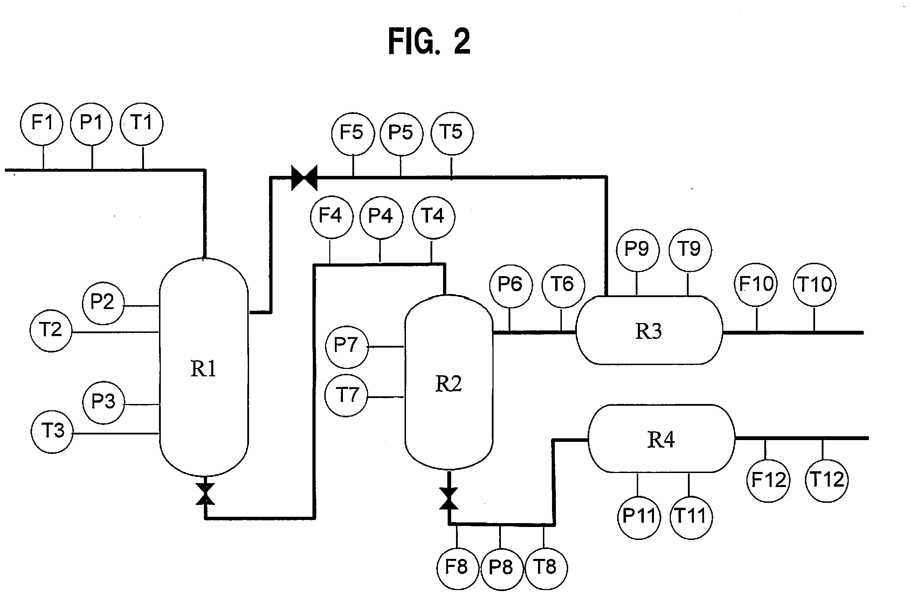

FIG.1 is a block diagram of a plant system. The plant system includes a plant 21 as shown in FIG.2, a plant control device 22, an operation unit 23, a plant operation support system 1, and a display operation unit 24. The plant 21 is controlled by the plant control device 22 mainly on the basis of set value data to be input from the operation unit 23. The plant operation support system 1 displays guidance of various operations for supporting an operator who operates the operation unit 23 to understand operation contents of the plant 21, on the display operation unit 24. The display operation unit 24 further receives data to be input to the plant operation support system 1 from the operator.

The plant operation support system 1 is configured as a computer having CPU (Central Processing Unit), a memory, a storage unit such as a hard disk, and a network interface.

In the computer, the CPU executes a program loaded on the memory (called application and sometimes called app as an abbreviation for application) to operate a control unit configured with each processing unit.

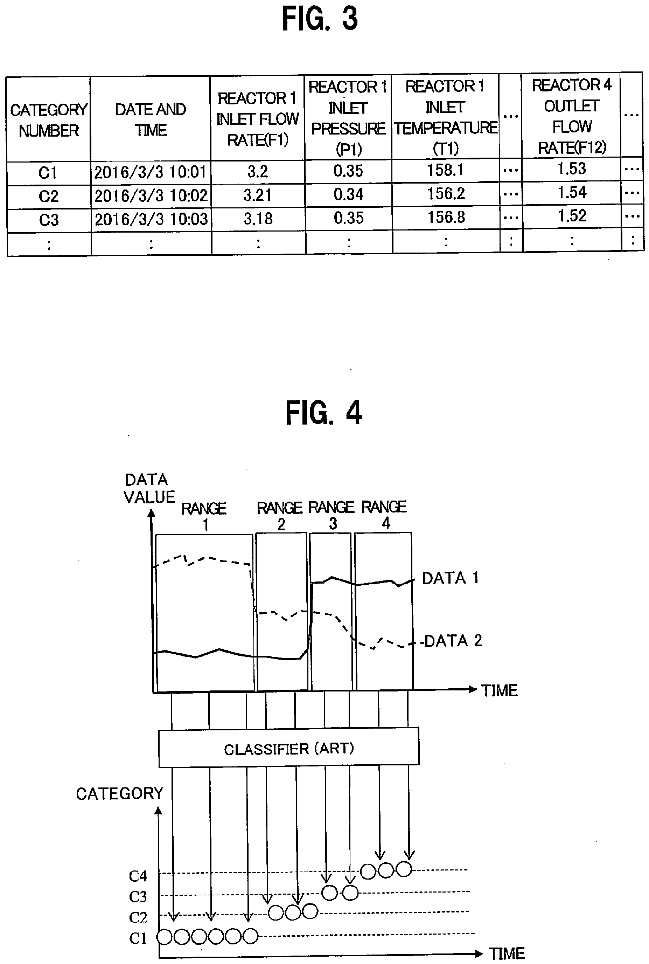

The plant operation support system 1 includes an operation data database 11, a target state candidate extraction unit 12, a plant simulator 13, an operation route evaluation unit 14, an operation route determination unit 15, and an operation route display unit 16. Each of these components of the plant operation support system 1 will be illustrated in details after FIG.3.

FIG.2 is an example of a system diagram of a chemical plant as the plant 21 that is displayed on a screen of the display operation unit 24. Further, though the chemical plant will be exemplified hereinafter, a power generation plant and a medicine plant or the like may be employed.

The system diagram is an electronic file prepared by, for example, CAD software for preparing a system diagram. The system diagram describes equipments, connecting piping, and major measurement instruments. The system diagram is called piping and instrumentation diagram or P&ID (Piping & Instrument Flow Diagram). The system diagram describes information on reactors R1 to R4 as the equipment, the piping that connects among the equipments, the measurement instruments. Further, 28 measurement instruments exemplified in FIG.2 have tags such as F1, P1, and T1 thereon. Here, F, P, and T represent a flow meter, a pressure gauge, and thermometer, respectively.

FIG.3 shows an example of operation data that is stored in an operation data database 11. The plant control device 22 collects the operation data of the plant 21 to store the collected operation data in the operation data database 11.

"Operation data" is a parameter set of time series data (data every date and time) on the plant 21. The "operation data" is composed of, for example, at least one parameter of parameters to be exemplified hereinafter.

As an example of the operation data, measurement data measured by a sensor of the plant 21 includes state data such as temperature data, pressure data, and flow data on the components of the plant. In the example of FIG.3, the measurement data such as a reactor 1 inlet flow rate and a reactor 1 inlet pressure measured by each of the measurement instruments of the plant 21 is stored, for example, at intervals of one minute.

Additionally, the measurement data may be observed not only when an operator of the plant 21 explicitly controls the plant 21, but also when a state of the plant 21 is changed by some disturbance. In other words, the operation data may shift to the operation data that shows deterioration of the plant performance without intension of the operator.

As another example of the operation data, the data to be input to components of the plant 21 includes operation amount data such as valve opening, set value data of control signal, and various kinds of condition data such as running condition, operating condition, and setting condition. These input data may be either input remotely to the components of the plant 21 from the operation unit 23 through the plant control device 22, or input directly to the components of the plant 21 by the operator of the plant 21.

Further, each of the operation data of the operation data database 11 is given an individual category number to be categorized. In other words, "category" may also be defined as operation data obtained from the plant 21 at a certain point in time.

FIG.4 is an explanatory drawing that shows an example in which the operation data is classified into categories (category numbers, an initial letter "C" is not shown) by a classifier. Here, Adaptive Resonance Theory (ART) that is one of data clustering technologies is employed as the classifier. The operation data to be input to the classifier is data that is normally four dimension and more. FIG.3 shows data composed of 28 items (dimensions). In contrast, in FIG.4, the operation data is simplified for explanation, and a case in which two-dimensional time series data composed of data 1 and data 2 is classified is exemplified.

The classifier classifies (categorizes) the operation data into categories, for example, in the following manner according to a relationship of data values between data 1 and data 2.
Category C1: a value for data 1: large, a value for data 2: small
Category C2: a value for data 1: middle, a value for data 2: small
Category C3: a value for data 1: middle, a value for data 2: large
Category C4: a value for data 1: small, a value for data 2: large

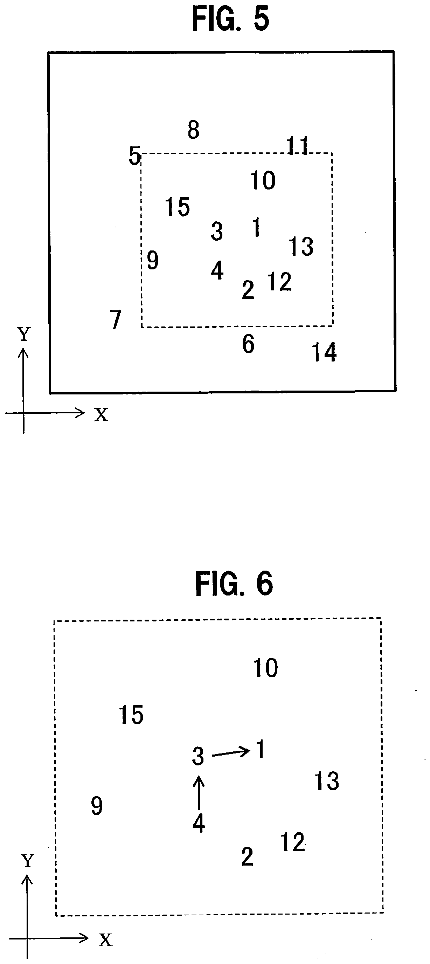

FIG.5 is an example that shows an example in which 15 categories are mapped to a two-dimensional plane (XY plane). A result obtained by mapping the categories to the two-dimensional plane will be called "category map data (map data)" hereinafter. The result allows a positional relation among the categories to be easily understood. The category map data is used like a map in a navigation system.

Herein, Multi Dimensional Scaling (MDS) is employed for mapping. MDS is a method in which, if a plurality of p-dimensional data is given distance information among the data, coordinates of the data are determined in such a way that the distance information is reproduced in a q-dimensional space. When p is larger than q, the distance information cannot necessarily be reproduced accurately. However, MDS is effective for understanding the approximate positional relation. Especially if q is equal to 2, the data in a multi-dimensional space can be mapped to a plane to be used for visualizing the multi-dimensional data.

FIG.6 is an explanatory drawing of an "operation route" that is set on the category map data. For an enlarged view of a dashed-line square part in FIG.5, the operation route that passes through the categories 4, 3, and 1 in order is indicated by arrows. The operation route corresponds to a guide route in the navigation system.

Hereinafter, how to call the categories with a focus on the operation route will be defined as follows.
- An "initial category" represents a state of the operation data at the time when the operation route is determined (of a departure place). In FIG.6, the initial category is equal to 4.
- A "current category" represents a state of the operation data of a current place that is located after the initial category. In FIG.6, the current category is equal to 3.
- A "target category" represents a state of the operation data to be target (at a target place) in the determined operation route. In FIG.6, the target category is equal to 1.

Next, a shifting degree and a deviation state of the current category relative to the operation route will be defined by the positional relation between the current category and the operation route.

A state that the current category is in the "deviation state" relative to the operation route refers to a state that the current category is deviated from an arrow line that indicates the operation route, including, for example, the current category is located in the category 2 in FIG.6. In contrast, a state that the current category is in a non-deviation state refers to a state (the category 3 or the like) in which the current category is located on the arrow line that indicates the operation route.

The "shifting degree" of the current category is determined, for example, by the positional relation of the current category relative to a distance of the operation route. For example, while the current category is in progress by 70 % on the arrow line between category 3 and category 4 from the category 3 toward the category 4, the current category is shifting by 70 % from the category 3 toward the category 4. In such a case, on the basis of a shifting time taken to shift from the initial category (the category 4) to the current category (shifting by 70 % toward the category 3), an estimated time at which the current category will complete shifting toward the category 3 can be obtained.

Further, "shifting the current category to the next category" refers to various operations to the plant 21 to change the current category from a state indicated by the current category to a state indicated by the next category.

For example, when the operation data includes the valve opening, the operator of the plant 21 changes the valve opening to shift the operation data from the current category (opening: 40%) to the next category (opening: 60%). When changing work of the valve opening is completed, the shifting to the next category is completed.

In contrast, when the operation data includes temperature data, in order to shift the operation data from the current category (temperature 248 degrees F) to the next category (temperature 302 degrees F), a set value for the temperature is changed to be 302 degrees F from the operation unit 23, and then the control signal is transmitted to the plant 21, and then the control signal is transmitted to the plant 21. As a result, when the amount of heating vapor is increased to make the temperature data indicate 302 degrees F actually, the shifting to the next category is completed.

Returning to FIG.1, the target state candidate extraction unit 12 extracts the target category according to the plant performance value for each of the categories and the distance to each of the categories starting from the initial category. If there exist a plurality of the extracted candidates for the target category exist, the target state candidate extraction unit 12 determines one to be adopted from among the candidates.

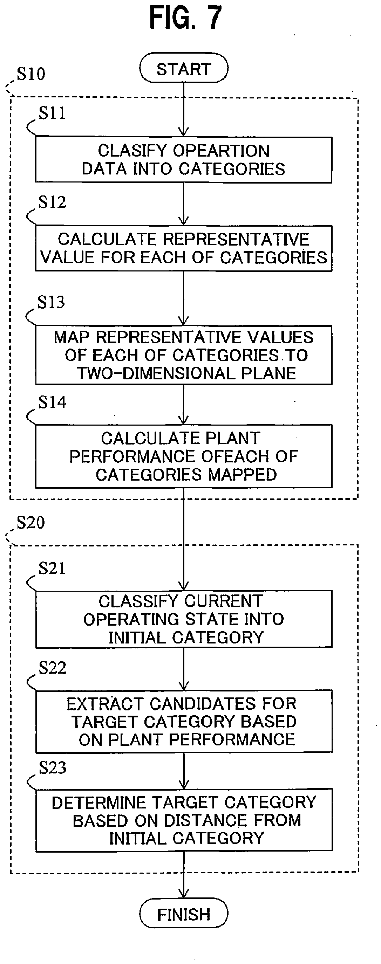

FIG.7 is a flowchart that shows a processing performed by the target state candidate extraction unit 12.

S10 (S11 to S14) is a processing of preparing in advance the category map data as FIG.5, and the processing is performed every time the category of the operation data is updated.

In S11, the target state candidate extraction unit 12 categorizes the operation data in FIG.3 according to the similarity as described in FIG.4.

In S12, the target state candidate extraction unit 12 calculates a representative value for the operation data for each of the categories. Here, a mean value for each of the operation data is determined to be the representative value. The operation data used in the present embodiment is 28 items as shown in FIG.3. For example, if the number of data included in the category C1 is 100, the mean value for 100 pieces of data for each of the items such as the reactor 1 inlet flow rate and the reactor 1 inlet pressure is calculated. Further, the mean value is employed as the representative value in the present embodiment, but other representative values such as a median may be employed.

In S13, the target state candidate extraction unit 12 maps the representative value for the operation data of S12 to the two dimensional plane (the category map data) as described in FIG.5.

In S14, the target state candidate extraction unit 12 calculates a mean value for the plant performance of the operation data classified into each of the categories. In the present embodiment, the plant performance is obtained as product yield by a formula "product yield=K*F12/F1". Here, F12 represents a reactor 4 outlet flow rate that is flow rate of the product, and F1 represents the reactor 1 inlet flow rate. Additionally, K is a coefficient obtained by a theoretical formula. Given ideal operation data, the product yield K is 100%.

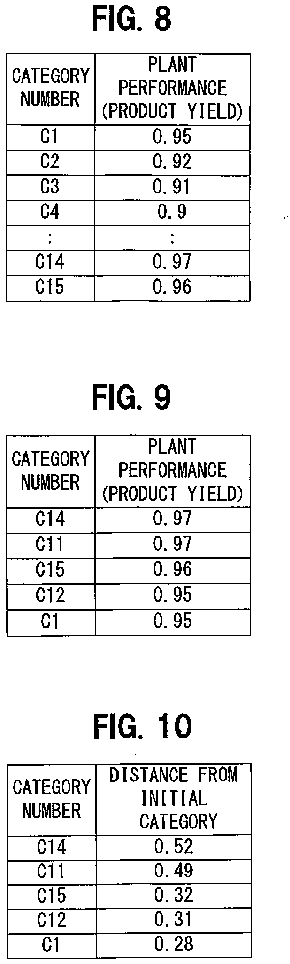

FIG.8 is a table that shows a calculation result of the plant performance in S14. The product yield representing the plant performance is calculated as an evaluation value for each of the categories for each of the operation data classified into 15 categories C1 to C15.

Further, the target state candidate extraction unit 12 maps the evaluation value as shown in FIG.8 to each of the categories scattered in the category map data.

Turning to FIG.7, S20 (S21-S23) represents a processing of newly setting a target category of the operation route on the category map data prepared in S10. In other words, since the new target category of the operation route is set with a state of the current operation data as a reference (the initial category), a processing of S20 is performed when a user desires to set the target category.

In S21, the target state candidate extraction unit 12 categorizes the current operation data using the classifier described in FIG.4. As a result, the initial category is determined to be the category 4.

In S22, the target state candidate extraction unit 12 extracts N categories that are high in the plant performance.

FIG.9 is a table obtained by extracting categories (N=5) in a descending order of the plant performance from the table of the plant performance of FIG.8

In S23, the target state candidate extraction unit 1 selects M categories that are close in distance (a distance between the representative values of the categories) to the initial category set in S21 from among the categories (N=5) extracted in S22 with reference to a disposition of each of the categories in the category map data.

The "Distance" here represents a spatial distance between a first position in the multi-dimensional space to which the operation data of a category A is mapped and a second position in the multi-dimensional space to which the operation data of a category B is mapped. If a straight-line distance between positions of each of the categories in the category map data as shown in FIG.5 is used as the distance between the categories, a small error from the distance in the multi-dimensional space may be caused. However, the tendencies of both of the cases are approximately the same, thus there is little influence (The order of the categories may seldom change) on a selection result of the target category.

FIG.10 is a table that shows a result obtained by sorting entries in the table of FIG.9 in an ascending order of distance
from the initial category (the category C4). If M is equal to 3, the target state candidate extraction unit 12 selects categories C14, C11, and C15 as the candidate for the target category.

As described as above, the target state candidate extraction unit 12 selects the categories that are high in the plant performance in S22, and further selects the category that is close to the initial category in S23. Thereby, it is possible not only to operate the plant 21 in high performance but also to select appropriately a well-balanced target category that allows a time required for changing an operation state to be shortened.

Turning to FIG.1, the operation route evaluation unit 14 evaluates the operation route starting from the initial category to the target category extracted by the target state candidate extraction unit 12 on the basis of a predetermined evaluation index.
Further, as long as the evaluation index is calculable ones such as an operating cost and the product yield, the evaluation index can be set arbitrarily. Furthermore, a plurality of the evaluation indexes may be calculated. Either the data of the operation data database 11 or the plant simulator 13 may be used for calculating the evaluation of the operation route.

An example will be described below, in which, starting from a state that the candidate for the target category is limited to be three categories of C1, 12, and C15 in S23, the operation route evaluation unit 14 evaluates the product yield for each of the operation routes by the plant simulator 13, so that the operation route determination unit 15 can determine the operation route (C4→C3→C1) in FIG.6.

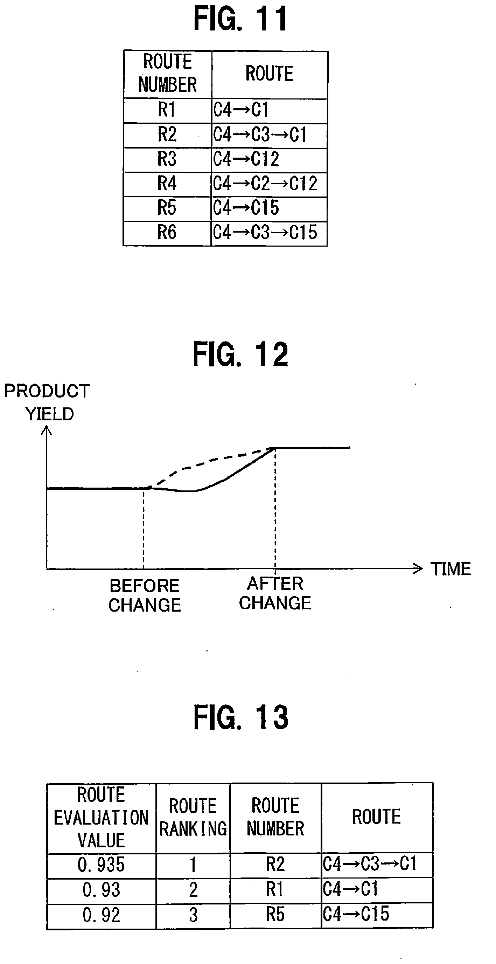

FIG.11 is a table that shows combinations of the operation routes starting from the initial category (the category 4) toward each of the candidates (C1, C12, and C15) for the target category. For example, there are two cases for a route from the category C4 to the category C1; one is a case (R1) that is directly heading to the category C1, and another is a case (R2) that is heading to the category C2 through the category C3. Similarly, there are two cases (R3, R4) for a route from the category C4 to the category C12. Accordingly, the number of the combinations is 6 in total.

The plant simulator 13 is a dynamic characteristic simulator that simulates the plant performance value such as the product yield for each of the operation routes according to the operation data of the plant 21, as characteristic of the plant 21. The plant simulator 13 firstly stabilizes the operation data in the category C4 of the initial category. The plant simulator 13 then shifts the operation data on each of the operation routes from the category C4 to the next category that is connected thereto by the arrow. The plant simulator 13 finishes the simulation stabilizes when the operation data of the current category is stabilized in the target category of an end point on each of the operation routes.

Further, since the plant simulator 13 is implemented with control logic of a real plant, the plant simulator 13 can simulate behavior of the real plant, as a transient state between the categories.

For example, in the operation route R1, when the shifting of the operation data from the category C4 of the initial category to the category C1 of the next category is stabilized, the simulation is finished. In contrast, in the operation route R2, the operation data shifts in two stages; firstly the operation data is stabilized in the category C3 starting from the category C4 of the initial category, and then the operation data is changed to be in the category C1.

FIG.12 is a graph that shows a transient state between two categories in a simulation result of the plant simulator 13. When the operation data is made to change, the product yield is not necessarily changed linearly from the category before the change to the category after the change. There is a case (a solid line graph) in which the product yield is deteriorated temporarily, to the contrary, there is a case (a dash line graph) in which the product yield is improved from a comparatively earlier stage.

The product yield for each of the routes can be calculated by the plant simulator 13 in such a way. Further, though the product yield was calculated as the evaluation index, the operating cost may be calculated. Furthermore, two evaluation indexes of the product yield and the operating cost are calculated separately, and then a weighed mean of the two evaluation indexes is calculated, so that a composite index of the weighed mean obtained by considering in a complex manner may be used as the evaluation index.

The operation route evaluation unit 14 may evaluate the operation route by using the past operation data stored in the operation data database 11 instead of using the plant simulator 13. For example, when evaluating the operation route R1 (C4-C1), the calculation is performed as follows.
(Step 1) From among the operation data within a predetermined period (for example, for the past six months) out of the operation data in the operation data database 11, all data that shifted from the category C4 to the category C1 is extracted. Since the operation data database 11 had been categorized in advance as shown in FIG.3, it is possible to extract rapidly four cases in which the operation data shifted from the category C4 to the category C1.
(Step 2) The evaluation index of the extracted four data is calculated, and the mean value is determined. In the present embodiment, the operation route evaluation unit 14 calculates the product yield for the actual operation data to determine the mean value.

The operation route evaluation unit 14 calculates the evaluation value by using the past actual operation data in such a way, to determine the evaluation value in higher accuracy than in a case in which the plant simulator 13 is used. However, the candidate for the operation route is not necessarily included in the past result operation data. In such a case, the plant simulator 13 may be used concurrently.

FIG.13 is a table that shows a result in which the operation route determination unit 15 determines the operation route according to the evaluation value (FIG.11) calculated in the operation route evaluation unit 14. The operation route determined by the operation route determination unit 15 is not limited to one operation route that is optimal, but a plurality of the operation routes may be determined in a descending order of the evaluation value. Further, the candidates for the operation route may be displayed in a descending order of the evaluation value to cause the operator to select one operation route.

Here, since the evaluation value includes only the product yield, the operation route determination unit 15 is only required to select basically the candidate that is highest in the product yield. In contrast, when there is no big difference in the product yield, the operation route determination unit 15 may search for the operation route in consideration of, for example, recent operation history and maintenance information of the components. Further, when there are a plurality of the evaluation indexes such as the product yield and the operation cost, the operation route determination unit 15 may select the operation route not only by judging only with the composite index of the plurality of the evaluation indexes but also by judging with importance placed on, for example, the operation cost.

The operation route display unit 16 displays the operation route determined by the operation route determination unit 15 on the display operation unit 24, as guidance. A display screen of the operation route displays on a part of the category map data the selected route indicated by the arrow, as shown in FIG.6. The operator of the plant 21 inputs the operation data along the operation route from the current category toward the target category in the operation unit 23 according to the display screen of the operation route.

This allows the plant control device 22 to control the plant 21 optimally to operate the plant 21 by the operation data that improves the plant performance.

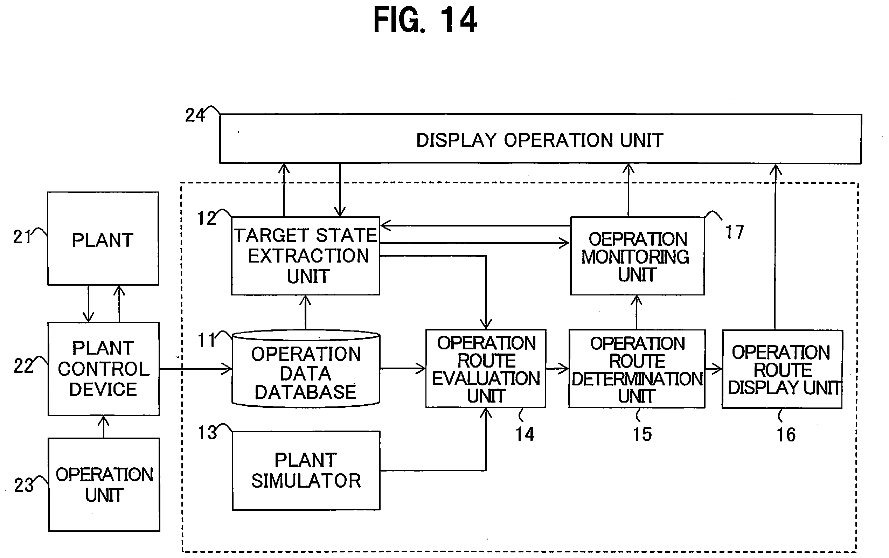

FIG.14 is a block diagram obtained by adding an operation monitoring unit 17 to the plant system of FIG.1.

The operation monitoring unit 17 monitors whether the operation data is shifting from the current category to the target category along the operation route determined by the operation route determination unit 15. While the current category is shifting smoothly without being deviated from the operation route, the operation monitoring unit 17 displays on the display operation unit 24 the degree of the shifting, as the guidance information to the current category. Alternatively, when the current category has been deviated from the operation route on which the current category is heading to the target category, the operation monitoring unit 17 displays on the display operation unit 24 the message.

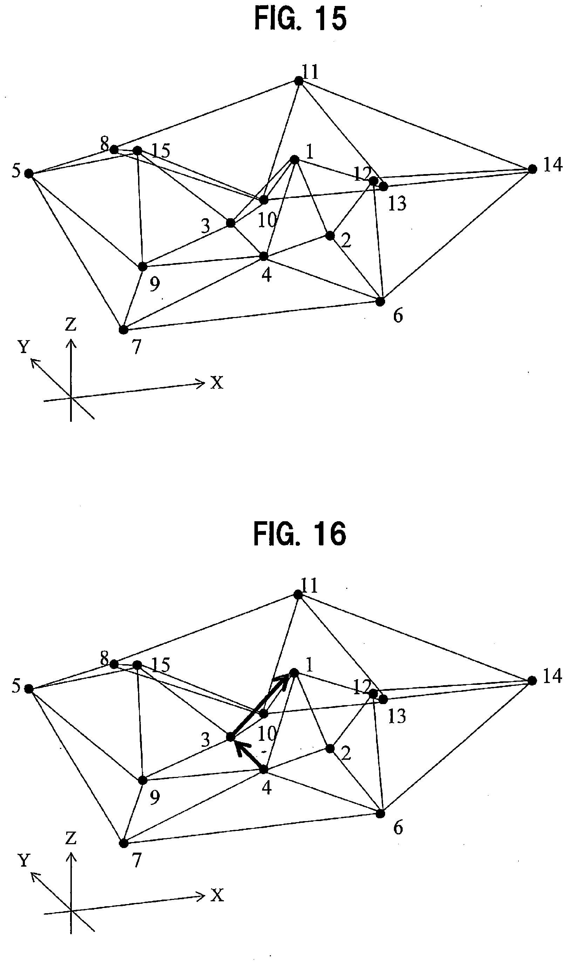

FIG.15 is an extended example obtained by representing the category map data in spatial coordinates (XYZ axes). The target state candidate extraction unit 12 maps the evaluation value calculated in S14 to a Z axis (in a height direction) to the XY plane of the category map data. Specifically, if, for a category j, a coordinate of the mean value that is mapped to the XY plane is (Xⱼ, Yⱼ), and the mean value for the plant performance is Kj, a relation between the category and KPI is represented by a coordinate (Xj,Yⱼ,Kⱼ).

By visualization in such a way, it is possible to understand intuitively not only the positional relation between the categories but also the plant performance of each of the categories.

FIG.16 is a display screen view on which the operation route R2 (the categories C4→C3→C1) indicated by the arrows is added to the category map data of FIG.15 as in FIG.6. In the category map data of FIG.16, the higher a position of the Z axis is, the more the plant performance improves, so that it is possible to understand intuitively what degree the plant performance is improving, even while the operation data is shifting to the current category.

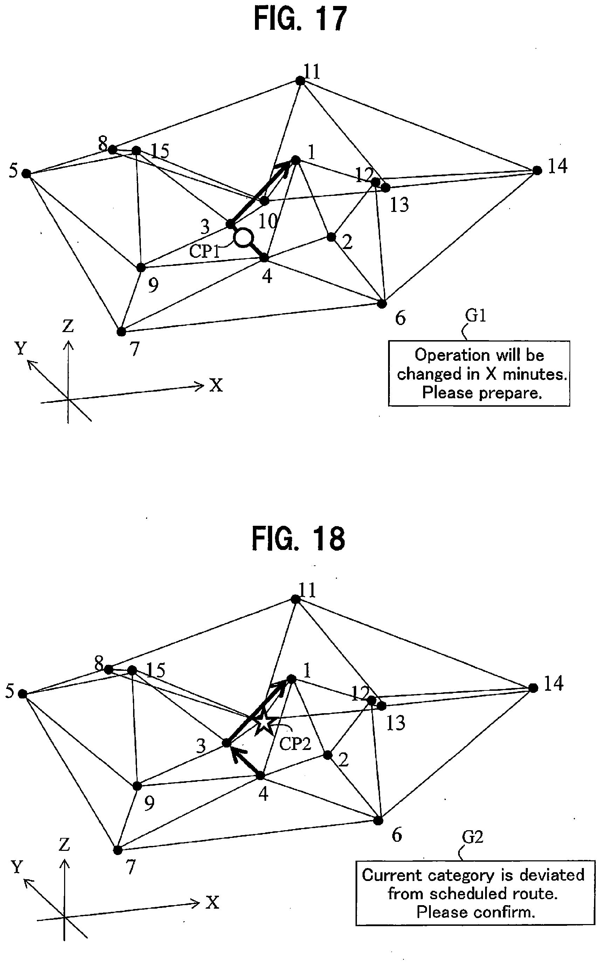

FIG.17 is a display screen view obtained by adding position information CP1 of the current category that is not deviated from the operation route and guidance G1 for a future operation, to the category map data of FIG.16.

In the present embodiment, the operation is performed so as to cause the current category to shift to the category C3 for the moment, and further the operation is performed to cause the current category to shift to the operation C1. Accordingly, at a stage when the current category comes close to the category C3, the guidance G1 informs the operator that the current category will be then operated so as to shift to the category C1. As described above, an expected time (X minutes) taken for the current category to reach the next category C3 is obtained by the degree of the shifting on the operation route of the current category. Accordingly, the operation monitoring unit 17 causes the display operation unit 24 to display that the operation will be changed in X minutes so as to cause the current category to shift from the category C3 to the category C1, as the guidance G1.

Displaying the guidance in such a way makes it possible to prevent an operational mistake caused by the operator. Further, it is preferable that an icon that indicates the position information CP1 should be displayed in a display form (emphasized, for example, by using different colors) different from that of nodes of each of the categories and a line between the nodes, so as to be noticeable.

FIG.18 is a display screen view obtained by adding position information CP2 of the current category that has been deviated from the operation route and guidance G2 for the future operation, to the category map data of FIG.16. First, the operation monitoring unit 17 informs the operator that the current category has been deviated by changing the display form depending on presence/absence of the deviation in such a way that an icon of the position information CP1 that hasn't been deviated is displayed in a green circle mark, and an icon of the position information CP2 that has been deviated is displayed in a red star mark.

Next, the operation monitoring unit 17 displays on the display operation unit 24 the guidance G2 of a warning that "The current category is deviated from a scheduled route. Please confirm." In FIG.17 and FIG.18, the guidance is displayed on the display screen, but voice guidance or both voice guidance and display guidance may be used.

Here, the operation monitoring unit 17 may instruct the operator to return the current category that has been deviated to the operation route, or may cause the target state candidate extraction unit 12 to recalculate (reroute in the navigation system) a new target category and an operation route with the current category as the start point (the initial category) (recalculation from S20). This allows the plant 21 to be operated more optimally on the basis of the current time regardless of the previous operation route from which the operation data has been deviated.

In the present embodiment as described above, in such a case as when the plant performance deteriorates, it is possible to set the operation data of the target as the target category, to determine the optimal operation route that reaches the target category, resulting in operating the plant in high performance. Further, on the display screen of the category map data as in FIG.17, which position the current category is shifting up to on the operation routes reaching the target category is visualized. This allows the operator to understand how to update the current operation data.

The present invention is not limited to the embodiment as described above, but various modifications are included. For example, the foregoing embodiment was described in details for easily understanding the present invention. However, the present invention is not necessarily limited to an embodiment provided with all of the configurations described.

Further, it is possible to replace a part of configuration of one embodiment by a part of configuration of the other embodiment, and also possible to add the configuration of the one embodiment to the configuration of the other embodiment.

Furthermore, it is possible to perform addition/deletion/replacement of the other configuration for a part of the configuration of each of the embodiments. Additionally, a part or all of each of the above configurations, functions, units, and processing units may be implemented in hardware, for example, by being designed as an integrated circuit.

Additionally, each of the above configurations and functions may be implemented in software in such a way that a unit interprets a program for realizing each of the functions to execute the program.

Information such as program, table, and file for realizing each of the functions can stored in recorders such as a memory, hard disk, SSD (Solid State Drive), or recording media such as IC (Integrated Circuit) card, SD card, and DVD (Digital Versatile Disc).

Further, control lines and information lines that are needed for explanation are indicated, thus all control lines and information on a product are not necessarily shown. It may be assumed that almost all of the configurations are actually connected with each other.

Further, communication means for connecting each of the devices is not limited to a wireless LAN, but wireless LAN may be replaced by a wired LAN and other communication means.

### Reference Signs List

1 Plant operation support system
11 Operation data database
12 Target state candidate extraction unit (Target extraction unit)
13 Plant simulator
14 Operation route evaluation unit (Route determination unit)
15 Operation route determination unit (Route determination unit)
16 Operation route display unit
17 Operation monitoring unit
21 Plant
22 Plant control device
23 Operation unit
24 Display operation unit (Display unit)

## Claims

1. A plant operation support system, comprising:
a target extraction unit configured to calculate, for each of operation data that is at least one of data measured on a plant to be controlled and input data for controlling the plant, respective evaluation values for the plant that is operated according to each of the operation data, and respective spatial distances from a first position in a n-dimensional space (n≧2) to which current operation data is mapped to a second position in the n-dimensional space to which each of the operation data is mapped, to extract candidates for target operation data according to the respective evaluation values and the respective spatial distances that are calculated respectively;
a route determination unit configured to evaluate, for each of the extracted candidates for the target operation data, with operation content from the current operation data to the target operation data as an operation route, the operation route for each of the candidates, to determine the operation route to be adopted and the target operation data that is an end point of the operation route to be adopted; and
a display unit configured to display on map data the operation route from the operation data that is a start point of the operation route to the target operation data.

2. The plant operation support system according to Claim 1, wherein, when the target extraction unit extracts the candidates for the target operation data according to the respective calculated evaluation values and the spatial distances, the target extraction unit extracts a first number of the operation data in a descending order of the respective calculated evaluation values, as a first set of candidates, and then extracts a second number of the operation data in an ascending order of the respective spatial distances from among the first set of the candidates, as a second set of candidates, to notify the route determination unit of the second set of the candidates, as an extraction result.

3. The plant operation support system according to Claim 1 or Claim 2, further comprising:
an operation monitoring unit,
wherein the operation monitoring unit causes the display unit to display additionally on the map data information representing the current operation data.

4. The plant operation support system according to Claim 3, wherein the operation monitoring unit causes the display unit to display the information representing the current operation data in different display forms between when the current operation data is deviated from the operation route and when the current operation data is not deviated from the operation route.

5. The plant operation support system according to Claim 4, wherein, when the current operation data is deviated from the operation route, the operation monitoring unit causes the target extraction unit to extract again candidates for new target operation data that is different from the target operation data of the operation route from which the current operation data is deviated, to update the operation route to a new operation route starting from the current operation data.

6. The plant operation support system according to any one of Claim 1 to Claim 5,
wherein the display unit displays the map data as a three-dimensional graph obtained by projecting a representative value for each of the operation data on a XY plane and mapping the evaluation value for the plant that is operated according to each of the operation data to a Z axis.

7. A plant operation support method including a target extraction unit, a route determination unit, and a display unit, comprising steps of:
calculating by the target extraction unit, for each of operation data that is at least one of data measured on a plant to be controlled and input data for controlling the plant, respective evaluation values for the plant that is operated according to each of the operation data, and respective spatial distances from a first position in a n-dimensional space (n≧2) to which current operation data is mapped to a second position in the n-dimensional space to which each of the operation data is mapped, to extract candidates for target operation data according to the respective evaluation values and the respective spatial distances that are calculated respectively;
evaluating by the route determination unit, for each of the extracted candidates for the target operation data, with operation content from the current operation data to the target operation data as an operation route, the operation route for each of the candidates, to determine the operation route to be adopted and the target operation data that is an end point of the operation route to be adopted and the operation data of the target that is an end point of the operation route; and
displaying on map data by the display unit the operation route from the operation data that is a start point of the operation route to the target operation data.
